(19) Europäisches Patentamt
European Patent Office
Office européen des brevets

(11) Publication number: 0 002 830
B1

(12) EUROPEAN PATENT SPECIFICATION

(45) Date of publication of patent specification: 25.05.83

(51) Int. Cl.³: C 08 L 23/02, H 01 B 3/44
//(C08L23/02, C08K5/54)

(21) Application number: 78101852.8

(22) Date of filing: 27.12.78

(54) **A wire or cable insulated with a dielectric composition stabilized against water treeing with organo silane compounds and its use.**

(30) Priority: 27.12.77 US 864751

(43) Date of publication of application:
11.07.79 Bulletin 79/14

(45) Publication of the grant of the patent:
25.05.83 Bulletin 83/21

(84) Designated Contracting States:
BE CH DE FR GB IT NL SE

(56) References cited:
EP - A - 0 001 876
EP - A - 0 003 239
EP - A - 0 004 752
FR - A - 2 110 002
FR - A - 2 353 119
GB - A - 1 177 200
GB - A - 1 286 460
GB - A - 1 502 164
US - A - 3 646 155
US - A - 3 746 734
US - A - 3 922 442
US - A - 3 957 719

(73) Proprietor: UNION CARBIDE CORPORATION
Old Ridgebury Road
Danbury Connecticut 06817 (US)

(72) Inventor: Ashcraft, Arnold Clifton
RD1 Box 355
Hightstown New Jersey (US)
Inventor: Turhett, Robert John
1738 Long Hill Road
Millington New Jersey (US)
Inventor: Burke, Timothy Richard
8 Petunia Drive
North Brunswick New Jersey (US)

(74) Representative: Schmied-Kowarzik, Volker, Dr. et al,
Patentanwälte P. Wirth V. Schmied-Kowarzik G. Dannenberg P. Weinhold D. Gudel
Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 002 830 B1

# A wire or cable insulated with a dielectric composition stabilized against water treeing with organo silane compounds and its use

This invention relates to a wire or cable insulated with a dielectric composition, resistant to water treeing, based on ethylene polymers.

Compositions based on polyolefins are well-known and they are used extensively as insulation materials for wire and cable. As insulation materials, properties of the composition such as intrinsic electrical strength, corona resistance and resistance to treeing are important.

Intrinsic electrical breakdown is the catastrophic failure of a dielectric accompanied by arcing or discharge through an ionized channel in the dielectric. The intrinsic dielectric strength is considered to be an inherent property of the dielectric material.

In power cable applications for transmitting relatively high voltage loads, such as 5 KV and above, corona may be a problem because it may lead to the premature breakdown of the cable insulation. Corona is an electrical plasma resulting from the ionization of a gaseous dielectric in regions of high electrical field. Corona resistance is the ability of a dielectric to withstand the corrosive action of an electrical plasma in contact with it.

When used as a high voltage power cable insulation, olefin base compositions undergo a prebreakdown phenomenon known as treeing. This type of damage progresses through a dielectric section under electrical stress so that, if visible, its path looks something like a tree. Treeing can occur and progress slowly by periodic partial discharge, it may occur slowly in the presence of moisture without any partial discharge, or it may occur rapidly as the result of an impulse voltage. Trees may form at sites of high electrical stress such as contaminants or voids in the body of the insulation or at irregularities at the insulation-semiconductive screen interface.

In solid organic dielectrics, treeing is the most likely mechanism of electrical failures which do not occur catastrophically, but rather appear to be the result of a more lengthy process. It is desired to extend the service life of olefin-insulated cables by modification of the insulating materials so that trees are initiated at higher voltages than usual or so that the rate of growth of trees is reduced once initiated.

Electrical treeing results from internal electrical discharges which decompose the dielectric. Although high voltage impulses can produce electrical trees, and the presence of internal voids and contaminants is undesirable, the damage which results from application of moderate a.c. voltages to electrode/insulation interfaces which conatin imperfections is more commercially significant. In this case, very high, localized stress gradients can exist and with sufficient time lead to initiation and growth of trees which may be followed by breakdown. An example of this is a high voltage power cable or connector with a rough interface between the conductor or conductor shield and the primary insulator. The failure mechanism involves actual breakdown of the modular structure of the dielectric material perhaps by electron bombardment. Much of the prior art is concerned with the inhibition of electrical trees.

Water treeing is a deterioration of a solid dielectric material which is simultaneously exposed to moisture and an electric field. It is a significant factor in determining the useful life of buried high voltage power cables. Water trees initiate from sites of high electrical stress such as rough interfaces, protruding conductive points, voids, or imbedded contaminants but at a lower field than that required for electrical trees. In contrast to electrical trees, water trees are characterized by: (a) the presence of water is essential for their growth; (b) no partial discharge is normally detected during their growth; (c) they can grow for years before reaching a size where they may contribute to a breakdown; (d) although slow growing, they are initiated and grow in much lower electrical fields than those required for the development of electrical trees.

Thus, intrinsic electric breakdown, failure by corona, electrical treeing and water treeing are different and the mechanisms for each are different. It follows that a different solution is required to effect an improvement in a dielectric material for each mode of failure involved.

Additionally, it is known that when cross-linked olefin polymers, particularly polyethylene, are used for power cable insulation, a crosslinking agent may function as a water treeing inhibitor. When dicumyl peroxide is used as the crosslinking agent in polyethylene, for example, the peroxide residue functions as a tree inhibitor for some time after curing. However, these residues are eventually lost at the temperatures of cable service. Therefore, in order to be an effective water treeing inhibitor an additive must be such that it is retained in the olefin composition at the temperature of cable service.

From the US—Patent Specifications 3 922 442 and 3 957 719 compositions adapted for coating electric wires and cables are known which comprise polymeric compounds based on ethylene which contain certain organo alkoxy silanes. The polymeric compositions described therein are, however, "filled" compositions which contain necessarily an inorganic filler.

In the US—Specification 3 957 719 furthermore the method of preparing the electric insulation requires four special steps including a heat treating of the mixture of ethylene, clay filler and an organo alkoxy silane for at least 24 hours.

Furthermore from the FR Patent Specification No. 7 615 783 a moisture-resistant electric power cable is known which consists of a conducting core, an insulating layer surrounding said core made of

an extrudable high organic polymer and a semi-conducting sheath of a high polymer, loaded with carbon-black and containing a silane, the sheath surrounding said insulating layer. It is mentioned that if silane is incorporated in the insulating layer, there is a risk of diminishing the insulating qualities on aging.

It has now been found that dielectric compositions based on ethylene polymers and used as insulation materials in high voltage wire and cable are protected from water treeing under long term use under high voltage conditions, if the composition contains as a water treeing inhibitor, one or more organo silanes.

An object of the present invention is to provide a process for employing dielectric materials as insulation in high voltage wire and cable while protecting such dielectric material against water treeing.

Another object of the present invention is to provide dielectric materials which are resistant to water treeing on high voltage wire and cable and which retain this resistance under the conditions of use of the wire and cable.

A further object of the present invention is to provide a high voltage wire and cable which is resistant to water treeing.

These and other objects are achieved by employing certain organo silane compounds as water treeing inhibitors in combination with ethylene polymers in the dielectric insulation compositions used according to the present invention.

The dielectric composition

The dielectric composition used in the present invention comprises, in weight ratio,

100 parts by weight of ethylene polymer, as described below, and

0.1 to 10, and preferably, 0.5 to 3.0 parts by weight of at least one of the organo silane compounds which are also described below.

Ethylene polymer

The ethylene polymers which are used in the compositions used according to the present invention are solid (at 25°C) materials which may be homopolymers or copolymers of ethylene. The ethylene copolymers contain at least 30 weight percent of ethylene and up to 70 weight percent of propylene, and/or up to 50 weight percent of one or more other organic compounds which are interpolymerizable with ethylene. These other compounds which are interpolymerizable with ethylene are preferably those which contain polymerizable unsaturation, such as is present in compounds containing an ethylene linkage, $>C=C<$. These other interpolymerizable compounds may be hydrocarbon compounds such as, butene-1, pentene-1, isoprene, butadiene, bicycloheptene, bicycloheptadiene, and styrene, as well as vinyl compounds, such as, vinyl acetate and ethyl acrylate.

These compolymers could thus include those containing $>0$ to 70 weight percent of propylene and 30 to $<100$ weight percent of ethylene; and 0 to $<50$ weight percent butene-1 or vinyl acetate and 50 to $<100$ weight percent of ethylene; and 0 to $<30$ weight percent of propylene, $>0$ to 20 weight percent of butene-1 and 50 to $<100$ weight percent of ethylene.

Preferred copolymers are ethylene/ethyl acrylate, ethylene/propylene and ethylene/butene.

Also included in the term polymer are blends of one polymer with one or more other polymers. Illustrative of such blends are polyethylene with polypropylene, low-density polyethylene with high-density polyethylene, and polyethylene with olefin copolymers such as these indicated above.

The low density ethylene copolymers with $\alpha$-olefins may be made under low pressure conditions of about 10 to 21 bar with supported chromium oxide based catalysts that are modified with titanium and optionally, fluorine, as disclosed in U.S. Patents 3,606,736 and 4,011,382.

The ethylene polymers described herein have a density (ASTM 1505 test procedure with conditioning as in ASTM D-1248-72) of 0,86 to 0,96 grams and a Melt Index (ASTM D-1238 at 3 bar test pressure) of 0,1 to 10 decigrams per minute.

Organo silane

The organo silane which is employed in the dielectric compositions used according to the present invention is selected from one or more compounds of the following formula:

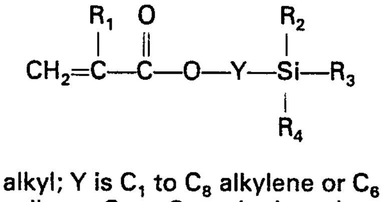

wherein $R_1$ is hydrogen or $C_1$ to $C_4$ alkyl; Y is $C_1$ to $C_8$ alkylene or $C_6$ to $C_{18}$ substituted or unsubstituted arylene; $R_2$ is $C_1$ to $C_8$ alkyl, $C_1$ to $C_8$ alkoxy, $C_6$ to $C_{18}$ substituted or unsubstituted aryl, $C_1$ to $C_8$ acyloxy, $C_6$ to $C_{18}$ substituted or unsubstituted aryloxy; $R_3$ and $R_4$ are independently selected from $C_1$ to $C_8$ alkoxy, $C_1$ to $C_8$ acyloxy or $C_6$ to $C_{18}$ substituted or unsubstituted aryloxy.

The preferred organo silane is

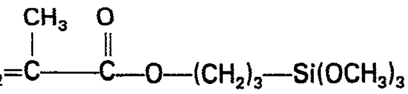

These compounds are generally well known in the art and are commercially available.

Adjuvants

In addition to the ethylene polymer and the organo silane, the dielectric composition used according to the present invention may also include cross-linking agents where the dielectric composition is to be used as a vulcanized composition rather than as a thermoplastic composition, and it is to be chemically cross-linked. These chemical vulcanizing, curing or cross-linking agents are well known to those in the art and include the organic peroxide type of cross-linking agents which are disclosed, for example, in United States Patents 2,826,570, 2,888,424, 2,916,481, 3,079,370 and 3,296,189.

The chemical cross-linking agents may be used individually or in combination with one another, and they are used in cross-linking effective amounts. The preferred cross-linking agent is di-$\alpha$-cumyl peroxide.

The dielectric compositions used according to the present invention also advantageously include one or more suitable high temperature antioxidants for the ethylene polymer in such compositions. The antioxidants include sterically hindered phenols or amines. Polymerized 2,2,4-trimethyl dihydroquinoline may also be used. These are used in conventional amounts to obtain the intended effect in the composition.

Other adjuvants which may be employed in the compositions used according to the present invention would include adjuvants commonly employed in ethylene polymer based dielectric compositions including lubricants, oil extenders, dyes and colorants and metal deactivators. However, inorganic fillers, such as carbon black, clay, talc, silica, or magnesium oxide, are not used with the described compositions.

Proper adjuvants would be used in amounts designed to provide the intended effect in the resulting composition.

The dielectric compositions used according to the present invention may also be extended, or filled, with polymers other than the ethylene polymer which are compatible, i.e., can be physically blended or alloyed, or grafted with the ethylene polymer. The resulting compositions should contain at least 30 weight percent of interpolymerized ethylene in all the polymers that may be present in the composition, based on the total weight of the resulting composition. The other polymers which may be used would include polyvinyl chloride and polypropylene, ethylene-propylene rubbers (EPR), ethylene-propylene-diene polymers (EPDM). styrene-butadiene-styrene block copolymers, urethane elastomers, polyester elastomers, natural rubber.

The total amount of adjuvants used will range from 0 to 60 weight percent, preferably 0 to 10 weight percent based on the total weight of the dielectric composition.

Processing of the dielectric compositions

All of the components of the dielectric compositions used according to the present invention are usually blended or compounded together prior to their introduction into the extrusion device from which they are to extruded onto an electrical conductor. The ethylene polymer and the other desired constituents may be blended together by any of the techniques used in the art to blend and compound thermoplastics to homogeneous masses. For instance, the components may be fluxed on a variety of apparatus including multi-roll mills, screw mills, continuous mixers, compounding extruders and Banbury mixers.

After the various components of the compositions used according to the present invention are uniformly admixed and blended together, they are further processed, in accordance with the process of the present invention, in conventional extrusion apparatus at 120° to 160°C for cross-linkable compositions and 200°C for thermoplastic compositions.

After being extruded onto a wire or cable, or other substrate, the cross-linkable compositions used according to the present invention are vulcanized at elevated temperatures of 180°C and preferably at 215—230°C using conventional vulcanizing procedures.

Evaluation of organo silane water treeing inhibitors in dielectric compositions

In order to determine the utility and effectiveness of the water treeing stabilized dielectric compositions used according to the present invention, the compositions were evaluated with the organo silanes incorporated therein by use of an accelerated water tree test which incorporates a combination of frequency acceleration and a standard-defect specimen. The test utilizes a compression molded dish-shaped specimen having 24 conical depressions molded into the bottom.

Figure 1 shows a cross sectional view of the specimen where a is 152.4 millimeters, b is 25.4

millimeters and c is 19.05 millimeters. The conical depression, W, of Figure 1 is magnified in Figure 1A, where d is 3.18 millimeters, e is 60 degrees, f is 3.18 millimeters, g is 6.35 millimeters and the tip radius is about 5 $\mu$m. The calculated maximum field is about 250 kV/mm in a typical 15 kV power cable.

When testing these specimens, 100 ml of an electrolyte solution is poured into the dish which is then placed into a grounded bath, usually containing the same electrolyte solution. A 50 millimeter diameter platinum wire ring is then immersed in the electrolyte in the dish and connected to the voltage source.

Preliminary experiments at 8.5 kHz showed that electrical treeing following by breakdown rapidly occured at test voltages of 10 kV or above. In order to limit the study to the effects of water treeing, the voltage used in the examples was 5 kV. Under these conditions a low density polyethylene specimen will develop water trees at the tips of the conical depression between 120 and 240 micrometers in length in 24 hours using 0.01 *N* NaCl in distilled water as the electrolyte solution.

To facilitate study of the water trees found, each of the twelve conical depressions nearest the center of the specimen is punched out using a 12.7 millimeter (1/2 inch) circular die and an arbor press. The resulting discs are placed in a boiling solution of 0.50 g methylene blue and 8 millimeter concentrated aqueous ammonia (28% approx) in 250 milliliter distilled water for 30 minutes. The discs are then sectioned and mounted on the microscope slides for examination. Specimens prepared in this way have been kept for periods up to two years without apparent deterioration of the appearance of water trees.

A typical water tree grown from 24 hours in low density polyethylene under the above conditions and stained as described, is depicted in Figure 2. The growth occurs in an approximately hemispherical region centered on the tip of the cone, which is usually heavily obscured. Because of this, the most satisfactory direction for measuring the extent of tree growth was found to be perpendicular to the side of the cone as indicated in Figure 2. In our procedure all twelve of the stained trees from the central group of conical depressions are measured and the average length calculated.

The rate of growth of water trees,

$$\frac{dL}{dt}$$

varies from their initiation, when the growth rate is quite fast, to a much slower rate after they have grown large. The data are fit by the empirical equation shown below:

(1) $$\frac{dL}{dt}=0.0240t^{-.606}$$

or equivalently:

(2) $$\frac{dL}{dt}=0.000323L^{-1.54}$$

where L is the length of the growing tree and t is the time at which the measurement is taken, in hours.

If one assumes that water trees are relatively conductive compared to polyethylene, one can calculate the electrical field, E, at the boundry of a growing gree from equation 3 which was derived for the point-to-plane geometry of the present test method.

(3) $$E=\frac{V\sqrt{1+r/d}}{r\tanh^{-1}(\sqrt{1/(1+r/d)})}$$

where V is the voltage applied to the electrolyte in the specimen dish, r, the point electrode radius, is identified with L, the length of the growing tree, and d is 3.175 mm—L, the distance to the ground electrode. A graph of experimentally measured tree growth rates, dL/dt, plotted as a function of $E^2$, calculated by equation 3, is given in Figure 3. The straight line passing through the data points is the graph of the equation:

(4) $$\frac{dL}{dt}=k\,E^2$$

where k is the rate constant for water treeing, and has the value of $2.47\times10^{-11}$ (mm/hr)/($V^2$/$mm^2$) for this experiment. Since E is known as a function of L from equation 3, one can numerically integrate the following equation 5:

$$\frac{dL}{E^2}=kdt \quad (5)$$

to provide a value for the rate constant for treeing from an individual measurement of tree length.

$$\int_0^L \frac{dL}{E^2}=\frac{1}{V^2}\int_0^L \frac{r^2(\tanh^{-1}\sqrt{1/(1+r/d)})^2dL}{1+r/d}=\frac{l}{V^2}=k\int_0^t dt=k\Delta t \quad (6)$$

$$k=\frac{l}{V^2\Delta t} \quad (7)$$

wherein dL, E, V, r, d and t are as previously defined. "Water Tree Growth Rate" is a relative rate determined from the expression k (material under test)/k (thermoplastic low density polyethylene homopolymer control), where k is defined by equation (7).

The following examples are not intended as a limitation upon the scope of the invention.

General admixing procedure

The dielectric compositions used in Examples 3 to 5 below were all prepared according to either Procedure A or Procedure B as follows:

Procedure A

Polyethylene homopolymer of 0.2 dg/min Melt Index and 0.92 g/$cm^3$ density, organo silane and antioxidant were charged to a Banbury mixer and compounded to a melt temperature of approximately 140°C. The resulting composition was then sheeted on a 2-roll mill, granulated and compression molded into test specimens, as heretofore described, at approximately 165°C.

Procedure B

Polyethylene homopolymer of 2.0 dg/min melt index and 0.92 g/$cm^3$ density, organo silane, antioxidant and dicumyl peroxide were charged to a Brabender mixer and compounded to a melt temperature no higher than 130°C. The resulting composition was granulated and compression molded, at 120°C as heretofore described and cured in the mold at approximately 180°C. Before testing, the molded specimen is annealed in an oven at 115°C for 15 minutes and then heated in a vacuum oven at 75°C for 28 hours to remove byproducts of the peroxide decomposition.

Control

The water tree growth rate of a commercial grade of polyethylene homopolymer having a melt index of 0.2 dg/minute and a density of 0.92 grams/$cm^3$ and containing 0.10 percent of 4,4′-thiobis(3-methyl-6-tert-butyl phenol) and mixed according to Procedure A, but without organo silane additive, was measured. The water tree growth rate was obtained by measuring the length of water trees formed in 24 hours and calculating the absolute rate of tree growth as heretofore described by equations (1) to (7). A relative value of 1.0 for water tree growth rate was assigned to this composition.

Example 1 (control)

The water tree growth of a cured cross-linkable polyethylene was measured.

Crosslinking was accomplished by using 2 percent of dicumyl peroxide. Also, 0.20 percent of 4,4′-thiobis(3-methyl-6-tert butyl phenol) was present as antioxidant. The WTGR was obtained as heretofore described. Relative water tree growth rate (hereinafter WTGR) is the ratio of the absolute rate for the test specimen to the absolute rate of the control. The WTGR for this composition was 0.06.

Example 2 (control)

Example 1 was exactly repeated except that the composition was placed in a vacuum oven at 75°C for 48 hours. The WTGR for this composition was 0.82.

Example 3

A crosslinkable composition containing the polyethylene of Example 1, 1.5 percent of γ-methacryloxypropyltriethoxy silane, 1.9 percent dicumyl peroxide and 0.15 percent each of

thiodiethylene-bis(3,5-ditert butyl-4-hydroxy)hydrocinnamate and distearylthiodipropionate as antioxidant was prepared according to Procedure B in a laboratory Brabender mixer at about 130°C. The product was granulated and compression molded at 115°C to form a water tree test specimen as heretofore described. The product was cured in the mold by heating to 175°C for 15 minutes. After removal from the mold, the test specimen was annealed in an oven for 15 minutes at 115°C and then vacuum treated for 48 hours at 75°C to remove peroxide decomposition products. The water tree growth rate was obtained by measuring the length of water trees formed in 24 hours and calculating the absolute rate of tree growth as heretofore described in equations (1) to (7). The WTGR for this composition was 0.03.

Example 4

Example 3 was exactly repeated except that 1.0 weight percent of γ-methacryloxy propyltrimethoxy silane was used and the composition was prepared in a commercial compounding line consisting of a continuous mixer, extruder and pelletizing device. The WTGR was measured and the results are shown in the Table.

TABLE

| Example | Organo silane (wt%) | WTGR |
|---|---|---|
| 1 | — | 0.06 |
| 2 | — | 0.82 |
| 3 | γ-methacryloxypropyl-triethoxy silane (1.5) | 0.03 |
| 4 | γ-methacryloxypropyl-triethoxy silane (1.0) | 0.12 |

The data in the Table shows that the organo silane inhibitor used according to this invention reduced the rate of water tree growth and that vacuum treatment did not cause any loss of inhibition as it did in the Control of Example 2.

Example 5

A thermoplastic composition of the following ingredients: ethylene-butene-1 copolymer having a melt index of 0.8 dg/minute and a density of 0.92 grams/cm$^3$, 1.0 percent of a silane prepared by reacting γ-methacryloxy propyltrimethoxy silane with p-hydroxy acetophenone in equimolar ratios (to cause interchange with one methoxy group of the silane) and 0.10 percent of thiodiethylene-bis(3,5-ditert butyl-4-hydroxy)hydrocinnamate antioxidant was prepared according to Procedure A. The WTGR of this composition was 0.17.

## Claims

1. An electric wire or cable which comprises a metallic conductor and an insulation of an dielectric composition comprising ethylene polymer and at least one organo silane, characterized in that the composition comprises an ethylene homopolymer or copolymer, solid at 25°C and having a density of 0,86 to 0,96 grams/cm$^3$ (according to ASTM 1505 with conditioning as in ASTM D-1248-72) and a Melt Index of 0,1 to 10 decigrams per minute (according to ASTM D-1238 at 3 bar test pressure), said copolymer comprising at least 30% by weight of ethylene, or a blend of at least two of said ethylene polymers or of said ethylene polymer and another polymer, said blend containing at least 30% by weight of interpolymerized ethylene in all the polymers, based on the total weight of the composition, and as a water treeing inhibitor, at least one organo silane in an amount of 0,1 to 10 parts by weight per 100 parts by weight of ethylene polymer of the following formula:

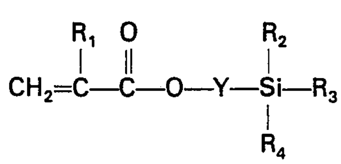

wherein $R_1$ is hydrogen or $C_1$ to $C_4$ alkyl; Y is $C_1$ to $C_8$ alkylene or $C_6$ to $C_{18}$ substituted or unsubstitued arylene; $R_2$ is $C_1$ to $C_8$ alkyl, $C_1$ to $C_8$ alkoxy, $C_6$ to $C_{18}$ substituted or unsubstituted aryl, $C_1$ to $C_8$ acyloxy, $C_6$ to $C_{18}$ substituted or unsubstituted aryloxy; $R_3$ and $R_4$ are independently selected from $C_1$ to $C_8$ alkoxy, $C_1$ to $C_8$ acyloxy or $C_6$ to $C_{18}$ substituted or unsubstituted aryloxy, and the composition is devoid of inorganic fillers and comprises not more than 60 percent by weight of compounds other than the ethylene polymer and silane.

2. An electric wire or cable as in Claim 1, wherein said water treeing inhibitor is:

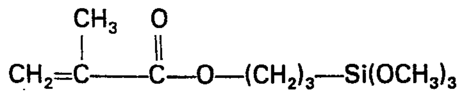

3. An electric wire or cable as in Claim 1 or 2, wherein said copolymer comprises an ethylene-$\alpha$-olefin copolymer.

4. An electric wire or cable as in Claim 3, wherein said ethylene-$\alpha$-olefin copolymer is ethylene-$\alpha$-butene copolymer.

5. An electric wire or cable as in at least one of Claims 1 to 4, wherein the dielectric composition comprises cross-linking effective amounts of at least one cross-linking agent.

6. An electric wire or cable as in Claim 5 wherein said cross-linking agent comprises at least one organic peroxide.

7. An electric wire or cable as in Claim 6, wherein said organic peroxide comprises di-$\alpha$-cumyl peroxide.

8. A process for producing an olefin polymer insulated wire or cable construction adapted for use as insulation in a water containing environment, characterized in that the insulation comprises an ethylene homopolymer or copolymer, solid at 25°C and having a density of 0,86 to 0,96 grams/cubic centimeter (according to ASTM 1505 with conditioning as in ASTM D-1248-72) and a Melt Index of 0,1 to 10 decigrams per minute (according to ASTM D-1238 at 3 bar test pressure), said copolymer comprising at least 30% by weight of ethylene, or a blend of at least two of said ethylene polymers or of said ethylene polymer and another polymer, said blend containing at least 30% by weight of interpolymerized ethylene in all the polymers, based on the total weight of the composition, and as a water treeing inhibitor, at least one organo silane in an amount of 0,1 to 10 parts by weight per 100 parts by weight of ethylene polymer of the following formula:

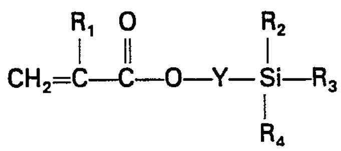

wherein $R_1$ is hydrogen or $C_1$ to $C_4$ alkyl; Y is $C_1$ to $C_8$ alkylene or $C_6$ to $C_{18}$ substituted or unsubstituted arylene; $R_2$ is $C_1$ to $C_8$ alkyl, $C_1$ to $C_8$ alkoxy, $C_6$ to $C_{18}$ substituted or unsubstituted aryl, $C_1$ to $C_8$ acyloxy, $C_6$ to $C_{18}$ substituted or unsubstituted aryloxy; $R_3$ and $R_4$ are independently selected from $C_1$ to $C_8$ alkoxy, $C_1$ to $C_8$ acyloxy or $C_6$ to $C_{18}$ substituted or unsubstituted aryloxy, and the composition is devoid of inorganic fillers and comprises not more than 60 percent by weight of compounds other than the ethylene polymer and silane.

**Patentansprüche**

1. Elektrischer Draht oder Kabel, umfassend einen metallischen Leiter und eine Isolierung aus einer dielektrischen Zusammensetzung, die ein Äthylen-Polymer und mindestens ein Organosilan umfaßt, dadurch gekennzeichnet, daß die Zusammensetzung ein Äthylen-Homopolymer oder -Copolymer, das bei 25°C fest ist und eine Dichte von 0,86 bis 0,96 g/cm³ (entsprechend ASTM 1505 mit Konditionierung gemäß ASTM D-1248-72) sowie einen Schmelzindex von 0,1 bis 10 dg pro Minute (entsprechend ASTM D-1238 bei 3 bar Testdruck) hat, wobei das Copolymer mindestens 30 Gew.% Äthylen umfaßt, oder eine Mischung von mindestens 2 dieser Äthylen-Polymere oder dieses Äthylen-Polymers mit einem anderen Polymer, wobei diese Mischung mindestens 30 Gew.% interpolymerisiertes Äthylen in allen Polymeren, bezogen auf das Gesamtgewicht der Zusammensetzung, enthält, und als Wasser-Treeing-Inhibitor mindestens ein Organosilan in einer Menge von 0,1 bis 10 Gewichtsteilen pro 100 Gewichtsteile des Äthylen-Polymers der folgenden Formel:

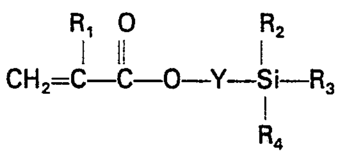

worin $R_1$ Wasserstoff oder $C_1$ bis $C_4$-Alkyl ist; Y $C_1$ bis $C_8$-Alkylen oder substituiertes oder unsubstituiertes $C_6$ bis $C_{18}$-Arylen ist; $R_2$ $C_1$ bis $C_8$-Alkyl, $C_1$ bis $C_8$-Alkoxy, substituiertes oder unsubstituiertes $C_6$ bis $C_{18}$-Aryl, $C_1$ bis $C_8$-Acyloxy, substituiertes oder unsubstituiertes $C_6$ bis $C_{18}$-Aryloxy ist; $R_3$ und $R_4$ unabhängig ausgewählt sind unter $C_1$ bis $C_8$-Alkoxy, $C_1$ bis $C_8$-Acyloxy oder substituiertem oder unsubstituiertem $C_6$ bis $C_{18}$-Aryloxy, umfaßt und die Zusammensetzung keine anorganischen Füllstoffe und nicht mehr als 60 Gew.% Verbindungen außer dem Äthylen-Polymer und Silan enthält.

2. Elektrischer Draht oder Kabel nach Anspruch 1, worin der Wasser-Treeing-Inhibitor

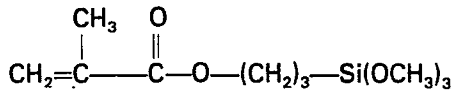

ist.

3. Elektrischer Draht oder Kabel nach Anspruch 1 oder 2, worin das Copolymer eine Äthylen-$\alpha$-Olefin-Copolymer umfaßt.

4. Elektrischer Draht oder Kabel nach Anspruch 3, worin das Äthylen-$\alpha$-Olefin-Copolymer Äthylen-$\alpha$-Buten-Copolymer ist.

5. Elektrischer Draht oder Kabel nach mindestens einem der Ansprüche 1 bis 4, worin die dielektrische Zusammensetzung vernetzend wirksame Mengen mindestens eines Vernetzungsmittels umfaßt.

6. Elektrischer Draht oder Kabel nach Anspruch 5, worin das Vernetzungsmittel mindestens ein organisches Peroxid umfaßt.

7. Elektrischer Draht oder Kabel nach Anspruch 6, worin das organische Peroxid Di-$\alpha$-cumylperoxid umfaßt.

8. Verfahren zur Herstellung eines Olefinpolymerisolierten Draht- oder Kabelaufbaus, der zu Verwendung als Isolierung in einer wasserhaltigen Umgebung beeignet ist, dadurch gekennzeichnet, daß die Isolierung ein Äthylen-Homopolymer oder -Copolymer, daß bei 25°C fest ist und eine Dichte von 0,86 bis 0,96 g/cm$^3$ (entsprechend ASTM 1505 mit Konditionierung gemäß ASTM D-1248-72) und einen Schmelzindex von 0,1 bis 10 dg pro Minute (entsprechend) ASTM D-1238 bei 3 bar Testdruck) hat, wobei das Copolymer mindestens 30 Gew.% Äthylen umfaßt, oder eine Mischung von mindestens 2 dieser Äthylen-Polymere oder dieses Äthylen-Polymers und einem anderen Polymer, wobei die Mischung mindestens 30 Gew.% interpolymerisiertes Äthylen in allen Polymeren, bezogen auf das Gesamtgewicht der Zusammensetzung, enthält, und als Wasser-Treeing-Inhibitor mindestens ein Organosilan in einer Menge von 0,1 bis 10 Gewichtsteilen pro 100 Gewichtsteile Äthylen-Polymer der folgenden Formel:

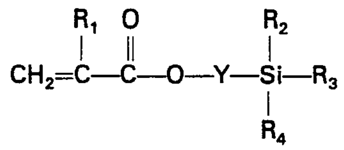

worin $R_1$ Wasserstoff oder $C_1$ bis $C_4$-Alkyl ist; Y $C_1$ bis $C_8$-Alkylen oder substituiertes oder unsubstituiertes $C_6$ bis $C_{18}$-Arylen ist; $R_2$ $C_1$ bis $C_8$-Alkyl, $C_1$ bis $C_8$-Alkoxy, substituiertes oder substituiertes $C_6$ bis $C_{18}$-Aryl, $C_1$ bis $C_8$-Acyloxy, substituiertes oder unsubstituiertes $C_6$ bis $C_{18}$-Aryloxy ist; $R_3$ und $R_4$ unabhängig ausgewählt sind unter $C_1$ bis $C_8$-Alkoxy, $C_1$ bis $C_4$-Acyloxy oder substituiertem oder unsubstituiertem $C_6$ bis $C_{18}$-Aryloxy, umfaßt und die Zusammensetzung keine anorganischen Füllstoffe und nicht mehr als 60 Gew.% Verbindungen außer dem Äthyl-Polymer und Silan enthält.

**Revendications**

1. Fil ou câble électrique comprenant un conducteur métallique et un isolant formé d'une composition diélectrique comprenant un polymère d'éthylène et au moins un organosilane, caractérisé en ce que la composition renferme un homopolymère ou copolymère d'éthylène, solide à 25°C et ayant une masse volumique de 0,86 à 0,96 g/cm$^3$ (d'après la norme ASTM 1505 avec conditionnement comme indiqué dans la norme ASTM D-1248-72) et ayant un indice de fusion de 0,1 à 10 dg/min (d'après la norme ASTM D-1238 sous pression d'essai de 3 bars), ledit copolymère comprenant au moins 30% en poids d'éthylène ou d'un mélange d'au moins deux desdits polymères éthyléniques ou dudit polymère éthylénique et d'un autre polymère, ce mélange renfermant au moins 30% en poids d'éthylène interpolymérisé dans tous les polymères, sur la base du poids total de la composition, et comme inhibiteur d'arborescence de l'eau, au moins un organosilane en une quantité de 0,1 à 10 parties en poids pour 100 parties en poids de polymère d'éthylène, de formule suivante:

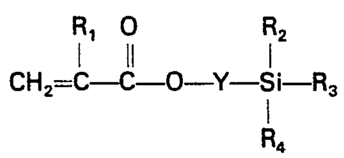

dans laquelle $R_1$ est l'hydrogène ou un groupe alkyle en $C_1$ à $C_4$; Y est une groupe alkylène en $C_1$ à $C_8$ ou arylène en $C_6$ à $C_{18}$ substitué ou non substitué; $R_2$ est un groupe alkyle en $C_1$ à $C_8$, alkoxy en $C_1$ à $C_8$, aryle en $C_6$ à $C_{18}$ substitué ou non substitué, acyloxy en $C_1$ à $C_8$, aryloxy en $C_6$ à $C_{18}$ substitué ou non

substitué; $R_3$ et $R_4$ sont choisis, indépendamment l'un de l'autre, entre des radicaux alkoxy en $C_1$ à $C_8$, acyloxy en $C_1$ à $C_8$ ou aryloxy en $C_6$ à $C_{18}$ substitué ou non substitué, et la composition est dépourvue de charges inorganiques et ne renferme pas plus de 60% en poids de composés autres que le polymère d'éthylène et le silane.

2. Fil ou câble électrique suivant la revendication 1, dans lequel l'inhibiteur d'arborescence de l'eau répond à la formule

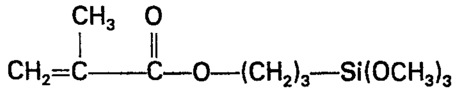

3. Fil ou câble électrique suivant la revendication 1 ou 2, dans lequel le copolymère est un copolymère d'éthylène et d'une $\alpha$-oléfine.

4. Fil ou câble électrique suivant la revendication 3, dans lequel le copolymère d'éthylène et d'une $\alpha$-oléfine est un copolymère d'éthylène et d'$\alpha$-butène.

5. Fil ou câble électrique suivant au moins l'une des revendications 1 à 4, dans lequel la composition diélectrique comprend des quantités à effet réticulant d'au moins un agent de réticulation.

6. Fil ou câble électrique suivant la revendication 5, dans lequel l'agent de réticulation comprend au moins un peroxyde organique.

7. Fil ou câble électrique suivant la revendication 6, dans lequel le peroxyde organique comprend du peroxyde de di-$\alpha$-cumyle.

8. Procédé de production d'une structure pour fil ou câble insolé par un polymère oléfinique, apte à être utilisée comme isolation dans un milieu contenant de l'eau, caractérisé en ce que l'isolant comprend un homopolymère ou copolymère d'éthyléne, solide à 25°C et ayant une masse volumique de 0,86 à 0,96 g/cm$^3$ (d'après la norme ASTM 1505 avec conditionnement comme indiqué dans la norme ASTM D-1248-72) et ayant un indice de fusion de 0,1 à 10 dg/min (d'après la norme ASTM D-1238 sous pression d'essai de 3 bars), ledit copolymère comprenant au moins 30% en poids d'éthylène ou d'un mélange d'au moins deux desdits polymères éthyléniques ou dudit polymère éthylénique et d'un autre polymère, ce mélange renfermant au moins 30% en poids d'éthylène interpolymérisé dans tous les polymères, sur al base du poids total de la composition, et comme inhibiteur d'arborescence de l'eau, au moins un organosilane en une quantité de 0,1 à 10 parties en poids pour 100 parties en poids de polymère d'éthylène, de formule suivante:

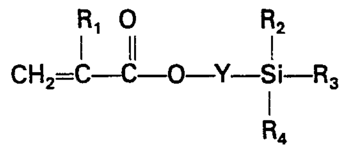

dans laquelle $R_1$ est -l'hydrogène ou un groupe alkyle en $C_1$ à $C_4$; Y est un groupe alkylène en $C_1$ à $C_8$ ou arylène en $C_6$ à $C_{18}$ substitué ou non substitué; $R_2$ est un groupe alkyle en $C_1$ à $C_8$, alkoxy en $C_1$ à $C_8$, aryle en $C_6$ à $C_{18}$ substitué ou non substitué, acyloxy en $C_1$ à $C_8$, aryloxy en $C_6$ à $C_{18}$ substitué ou non substitué; $R_3$ et $R_4$ sont choisis, indépendamment l'un de l'autre, entre des radicaux alkoxy en $C_1$ à $C_8$, acyloxy en $C_1$ à $C_8$ ou aryloxy en $C_6$ à $C_{18}$ substitué ou non substitué, et la composition est dépourvue de charges inorganiques et ne renferme pas plus de 60% en poids de composés autres que le polymère d'éthylène et le silane.

FIG. 1

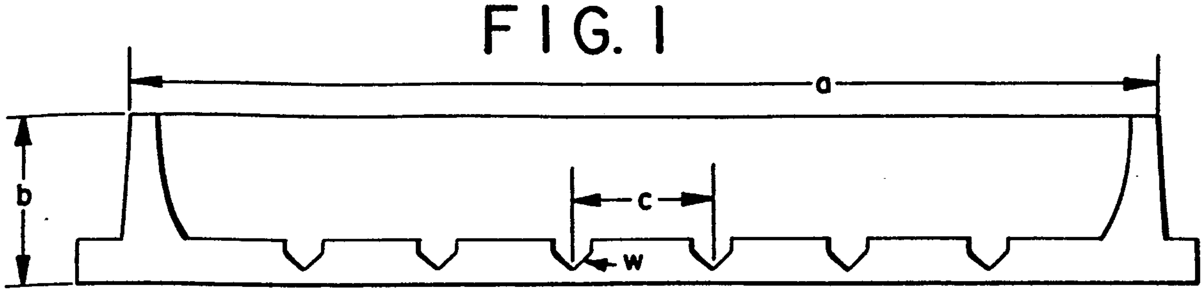


FIG. 1A

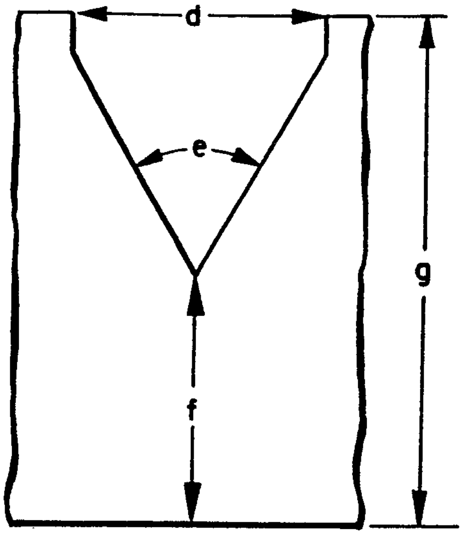


FIG. 2

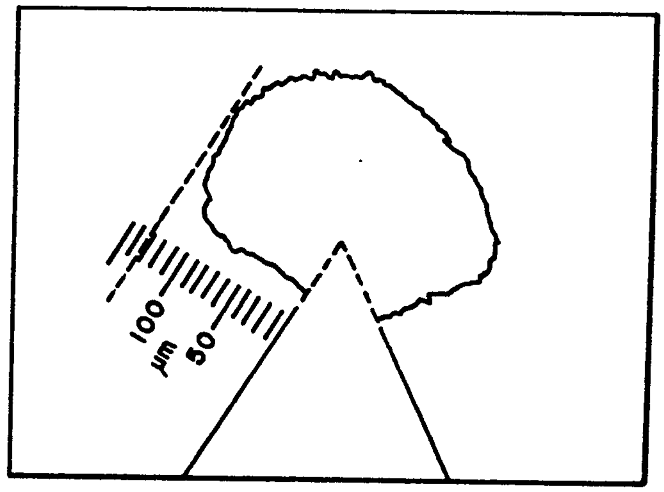


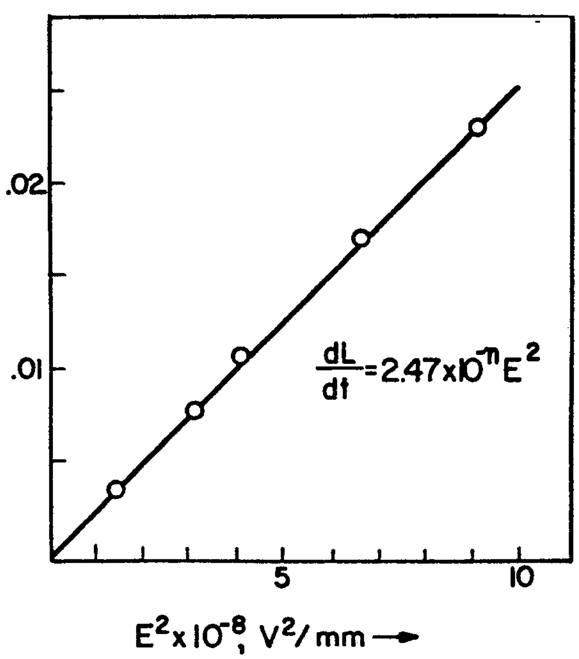


FIG. 3